# EUROPÄISCHE PATENTSCHRIFT

(11) **EP 2 454 151 B1**
(45) Veröffentlichungstag und Bekanntmachung des Hinweises auf die Patenterteilung: **08.05.2013**
(21) Anmeldenummer: 10801421.8
(22) Anmeldetag: 30.12.2010
(51) Int. Cl.: B64C 1/08, B64C 1/14, B64C 1/06

(54) **LUFT- ODER RAUMFAHRZEUGHÜLLE**
AIRCRAFT OR SPACECRAFT SHELL
ENVELOPPE D'AVION OU D'ENGIN SPATIAL

(30) Priorität: 30.12.2009 DE 102009060876
(43) Veröffentlichungstag der Anmeldung: 23.05.2012
(73) Patentinhaber: IMA Materialforschung und Anwendungstechnik GmbH, 01109 Dresden (DE)
(72) Erfinder: GOETZE, Matthias, 01129 Dresden (DE)
(74) Vertreter: Lippert, Stachow & Partner
(86) Internationale Anmeldenummer: PCT/EP2010/070934
(87) Internationale Veröffentlichungsnummer: WO 2011/080320

(56) Entgegenhaltungen:
- DE-A1-102006 025 930
- GB-A- 581 142
- US-A- 2 613 402
- US-A- 4 086 378
- HANSEN L.U.; HÄUSLER S.M., HORST P.: "Potential Benefits of Integrally Stiffened Aircraft Structures", 1ST CEAS EUROPEAN AIR AND SPACE CONFERENCE, 10. September 2007 (2007-09-10), - 14. September 2007 (2007-09-14), XP009150372, in der Anmeldung erwähnt
- Pettit, R.G; Wang, J.J; Toh, C: "Validated Feasibility Study of Integrally Stiffened Metallic Fuselage Panels for Reducing Manufacturing Costs", NASA/CR-2000-209342, Mai 2000 (2000-05), XP002651247, Gefunden im Internet: URL:http://ntrs.nasa.gov/archive/nasa/casi .ntrs.nasa.gov/20000057324_2000078253.pdf [gefunden am 2011-07-19] in der Anmeldung erwähnt

## Beschreibung

Die Erfindung betrifft eine Luft- oder Raumfahrzeughülle gemäß Oberbegriff des Patentanspruchs 1.

Die Erfindung beinhaltet spezielle Lösungsansätze für tragende, mechanische Strukturen, beispielsweise eines Flugzeugrumpfes, im Besonderen eines durch Innenüberdruck belasteten. Das primäre Ziel ist die Substitution der bekannten Fenster- und Türbereiche. Die Anwendbarkeit ist bezüglich der Werkstoffwahl unbeschränkt.

Die Erfindung lässt gleichzeitig die Erweiterung auf beliebige Flächentragwerke zum Beispiel mit minderkomplexen Belastungsszenarien zu, in denen ein den Kraftfluss störender Ausschnitt als notwendig erachtet wird.

Aus US 2 613 402 A ist eine Flugzeugkabine mit einem Fenster bekannt, das durch ein Gitter gestützt wird, das aus vertikalen Streben zur Aufnahme radialer Lasten und horizontalen Streben zur Aufnahme axialer Lasten gebildet ist.

DE 10 2006 025 930 A1 beschreibt in ähnlicher Weise wie US 2 613 402 A eine Rumpfstruktur mit einer Innenschalenanordnung, welche eine obere Innenschale und eine untere Innenschale aufweist, wobei die obere Innenschale zumindest abschnittsweise um einen ersten Spalt zum Bilden eines Fensterbereiches von der unteren Innenschale beabstandet ist; und einem Fensterband, welches zumindest im Fensterbereich angeordnet ist und eine Scheibeneinrichtung aufweist, welche eine Rumpfkräfte aufnehmende Gitterstruktur umfasst.

Weiteren Stand der Technik auf diesem Gebiet bilden die nachfolgend angegebenen Druckschriften:
/1/ Pettit, R. G./ Wang, J.J./ Toh, C.; "Validated Feasibility Study of integrally stiffened metallic Fuselage Panels for Reducing Manufacturing Costs" - Report CR-2000-209342; Boeing/ NASA Mai 2000
/2/ Hansen, L. U./ Häusler, S. M./ Horst, P.; "Potential Benefits of integrally stiffened Aircraft Structures"Präsentation; 1st CEAS Berlin 10.-14.09.2007
/3/ The Boeing Company; "Apparatus and Methods for Reinforcing a structural Panel" - EP1642826A1; Priorität 04.10.2004 (US958079)
/4/ The Boeing Company; "Apparatus and Methods for Installing Aircraft Window Panel" - EP1642824A2; Priorität 04.10.2004 (US958080)
/5/ McDonnell Douglas Corp.; "Composite Shell formed as a Body of Rotation and Method and Mandrel for Making same"-US005814386A; Priorität 29.09.1998 (RU95120432 01.12.1995)
/6/ McDonnell Douglas Corp.; "Composite Shell shaped as a Body of Revolution and Panel Connection Joint" - US6068902; Priorität 30.05.2000 (RU96121193 29.10.1996)
/7/ McDonnell Douglas Corp.; "Composite Shell shaped as a Body of Revolution" - US6155450; Priorität 05.12.2000 (RU96121435 29.10.1996)

Fenster, Türen, Tore u.ä. werden regelmäßig als Unterbrechungen einer orthogonalen oder zumindest nahezu orthogonalen mechanischen Struktur behandelt. Orthogonal ist in diesem Zusammenhang oft übertragbar in orthotrope Schalen in Differentialbauweise.

Diese Schalen zeichnen sich durch eine tragende quasiisotrope Haut mit orthogonal aufgebrachten Versteifungselementen, längs Stringer und in Umfangsrichtung Spante genannt, aus. Die Öffnungen entsprechen aufgewickelten Langlöchern oder Rechtecken mit verrundeten Ecken. Strukturmechanisch lässt sich eine Analogie zu Rahmen mit biegesteifen Ecken herstellen. Insbesondere an Türausschnitten verdeutlichen dies die nach dem Stand der Technik verwendeten Dopplerlagen im Zusammenspiel mit Spanten und Hilfsspanten. Das dieser Auffassung zugrundeliegende Verständnis führt zu dem Dogma: "Haltet Ausschnitte so klein wie irgend möglich!".

In der Forschung und Entwicklung ist mittlerweile eine Tendenz zu beobachten, bei der es sich um kraftflussgerechte Gestaltungen der Umgebung handelt, siehe NASA /1/ und TU Braunschweig /2/. Das grundsätzliche Verständnis wird hierbei jedoch nicht angetastet.

Selbst bei ersten Entwicklungen unter Nutzung von Faserverbundmaterialien, denen ein maßgeschneiderter Einsatz und das konstruktive Umdenken vielzitiert unterstellt wird, bleibt ein Paradigmenwechsel aus. Boeing stellt lediglich einen Ansatz zur Vergrößerung der nutzbaren Fensterfläche sowie gleichzeitigen Vereinfachung in der Herstellung mit Faserverbundtechnologie als Rahmenbauweise vor:
Alle bekannten Anstrengungen, die Form oder die umgebende mechanische Struktur weiterzuentwickeln, beschränken sich darauf, dass ein Fenster innerhalb der Flugzeugrumpfröhre ein störendes, kleinzuhaltendes Loch darstellt. Insbesondere bei überdruckbelasteten Rümpfen für Flughöhen über 3000m wird diese Denkweise deutlich. Der Umgang mit diesen Ausschnitten ist regelmäßig auf Rahmen mit biegesteifen Ecken zurückzuführen, wenn ausgeführte Beispiele betrachtet werden.

Dies steht im krassen Widerspruch zu einer der konträren Zielstellungen für Entwürfe und Gestaltungen der Kabineninnenräume. Mit dem Modell Boeing 787 (DreamLiner) verändern sich die Größenordnungen der Fensterfläche noch nicht, obwohl reichlich mit 20%...30% höheren Fenstern geworben wird.

Als Weiterführung können die Anstrengungen zur Integration der Fenster in die tragende Struktur des Rumpfes verstanden werden /3, 4/. Offen bleibt bisher, welches transparente Material geeignet sein könnte, den Belastungen standzuhalten. Aktuell wird der in der Fensterbaugruppe enthaltene, nicht transparente Rahmen als Lösungsansatz geführt.

Die Erfindung soll die beschriebene, harte Einschränkung für die Flugzeuggestaltung beseitigen.

Sie zielt darauf ab, insbesondere den Bereich der Fenster eines Flugzeugs als voll gültigen Bestandteil des Tragwerks/der Zelle verwenden zu können. Es eröffnet sich die Möglichkeit, Fenster etc. den gestalterischen Wünschen gemäß zu integrieren.

Das Wesentliche der Erfindung besteht in dem zu vollziehenden Wechsel der Tragwerkstopologie von einem Flächentragwerk zu einem Stabtragwerk und wieder zurück. Es ist unerheblich, welchen Aufbau das Flächentragwerk aufweist. Die entstehenden Öffnungen im Stabtragwerk werden durch nichttragende, jedoch druckdichte Elemente verschlossen.

Diese können Fenster, somit auch transparent, aber auch Tore oder Türen sein. Die Erfindung sieht in jedem Fall eine Adaption, sprich einen Übergang, zwischen den einzelnen Bereichen des Gesamttragwerks vor.

Ohne erheblichen Aufwand in die Aussteifung von Leichtbaustrukturen investieren zu müssen, kann mit der nachfolgend näher beschriebenen Erfindung die Aufgabe gelöst werden, ausgehend vom Stand der Technik bekannte Luft- oder Raumfahrzeughüllen dahingehend zu verbessern, dass Öffnungen in Flächentragwerken freier gestaltet werden können.

Zur Lösung der oben beschriebenen Aufgabe wird eine Luft- oder Raumfahrzeughülle vorgeschlagen, die eine Verbundschale umfasst aus ersten Stabelementen oder Sandwich-Kernelementen und aus ersten Hautelementen, die mit den ersten Stabelementen bzw. Sandwich-Kernelementen derart verbunden sind, dass sämtliche äußere Lasten von den ersten Stabelementen bzw. Sandwich-Kernelementen und ersten Hautelementen gemeinsam aufgenommen werden, wobei die Verbundschale mindestens eine Öffnung für ein Fenster, eine Tür oder dergleichen aufweist, und wobei in der Öffnung der Verbundschale ein Stabtragwerk aus mindestens zwei Gruppen von zweiten Stabelementen angeordnet ist, wobei zweite Stabelemente, die derselben Gruppe angehören, parallel zueinander angeordnet sind und zweite Stabelemente, die unterschiedlichen Gruppen angehören, nichtparallel zueinander angeordnet sind, die zweiten Stabelemente am Rand der Öffnung mit der Verbundschale verbunden sind und in jeder von zweiten Stabelementen begrenzten Teilöffnung ein zweites Hautelement so angeordnet ist, dass seine Ränder frei von Biegemomenten und Tangentialkräften sind, so dass sämtliche äußere Lasten allein von den zweiten Stabelementen in die Verbundschale abgeleitet werden.

Mit der beschriebenen Lösung ergeben sich folgende Vorteile:
Wegfall biegesteifer Ecken in Flächentragwerken, nahezu unbegrenzte Ausdehnung durchbrochener Flächen, neue, hochwillkommene gestalterische Möglichkeiten für Flugzeugfenster, alternative Tür- und Torausschnitte sowie die Möglichkeit der technologischen Vorbereitung nicht orthogonal versteifter Flächentragwerke.

In einer Ausgestaltung ist vorgesehen, dass das Stabtragwerk ein autonomes Stabtragwerk ist, das durch Verbinden der zweiten Stabelemente des Stabtragwerks mit der Verbundschale, insbesondere den ersten Stabelementen oder/und Hautelementen in die Öffnung der Verbundschale eingesetzt ist. Ein autonomes Stabtragwerk in diesem Sinne ist eine geschlossene Baugruppe, die im Gegensatz zu Lösungen, bei denen die zweiten Stabelemente des Stabtragwerks ganz oder teilweise einstückig mit den ersten Stabelementen der verbundschale ausgeführt sind, separat vorgefertigt und erst im fertigen Zustand in die Öffnung der Verbundschale eingesetzt und mit dieser verbunden werden kann.

Alternativ oder zusätzlich kann vorgesehen sein, dass mindestens zwei zweite Stabelemente des Stabtragwerks durch Knotenelemente miteinander verbunden sind. Derartige, an sich bekannte Knotenelemente verbinden die zweiten Stabelemente zu einem Stabtragwerk, wobei eine hohe Gesamtfestigkeit erzielt werden kann.

In einer Weiterbildung ist vorgesehen, dass das Stabtragwerk sternförmige Segmente umfasst, die jeweils mindestens drei einseitig miteinander verbundene zweite Stabelemente aufweisen und untereinander durch Verbinden freier Enden der zweiten Stabelemente verbunden sind. Ein sternförmiges Segment ist - mit anderen Worten ausgedrückt - ein Element, bei dem mindestens drei zweite Stabelemente mit je einem ihrer Enden in einem gemeinsamen, zentralen Punkt miteinander verbunden sind und die zweiten Stabelemente sich von diesem zentralen Punkt nach außen erstrecken. Die so gebildeten Strahlen des sternförmigen Segments weisen an ihren äußersten Punkten freie Enden auf, die mit den freien Enden anderer sternförmiger Segmente verbunden werden können, wodurch ein autonomes Stabtragwerk gebildet wird.

In einer Ausgestaltung ist vorgesehen, dass das Stabtragwerk polygonförmige Segmente umfasst, die jeweils mindestens drei miteinander verbundene zweite Stabelemente aufweisen und untereinander durch Verbinden ihrer Ecken verbunden sind. Beispielsweise kann das autonome Stabtragwerk aus einer Mehrzahl drei- oder mehreckiger Segmente zusammengesetzt sein, die an ihren Ecken jeweils mit der Ecke eines benachbarten drei- oder mehreckigen Segments verbunden sind. Das Innere jedes dieser polygonförmigen Segmente bildet eine Öffnung, in der ein zweites Hautelement angeordnet werden kann. Ebenso bilden die Außenseiten mehrerer polygonförmiger Segmente gemeinsam eine solche Öffnung, in der ein zweites Hautelement angeordnet werden kann.

Das Stabtragwerk kann gemäß einer anderen Ausgestaltung der Erfindung auch polygonförmige Segmente umfassen, die jeweils mindestens drei miteinander verbundene zweite Stabelemente aufweisen und untereinander durch Verbinden ihrer Seiten verbunden sind. Beispielsweise kann das autonome Stabtragwerk aus einer Mehrzahl drei- oder mehreckiger Segmente zusammengesetzt sein, die an der Außenseite eines zweiten Stabelements jeweils mit der Außenseite eines benachbarten zweiten Stabelements eines anderen drei- oder mehreckigen Segments verbunden sind. Das Innere jedes dieser polygonförmigen Segmente bildet eine Öffnung, in der ein zweites Hautelement angeordnet werden kann.

In einer anderen Ausgestaltung der Erfindung ist vorgesehen, dass das Stabtragwerk aus durchgehenden zweiten Stabelementen zusammengesetzt ist, die sich jeweils unterbrechungsfrei zwischen zwei Rändern der Öffnung erstrecken und an Kreuzungspunkten miteinander verbunden sind. Hierzu können zweite Stabelemente einer ersten Gruppe Aussparungen aufweisen, durch die sich zweite Stabelemente einer zweiten Gruppe hindurch erstrecken. Durch geeignete Verbindungsmittel, wie Blechwinkel oder dergleichen, werden die zweiten Stabelemente der ersten und zweiten Gruppe an den Kreuzungspunkten miteinander verbunden, um die Festigkeit zu erhöhen.

Bei jeder der oben beschriebenen Ausgestaltungen kann vorgesehen sein, dass mindestens drei zweite Stabelemente einen aufgelösten Knoten bilden, der eine kompakte Struktur darstellt, die als Versteifungselement wirkt oder/und der durch ein Versteifungselement ersetzt ist. Mit anderen Worten sind die zweiten Stabelemente relativ zueinander so angeordnet, dass sie sich nicht in einem gemeinsamen Punkt schneiden, sondern leicht versetzt so angeordnet sind, dass ein polygonförmiger Knoten entsteht. Dadurch wird ein autonomes Stabtragwerk gebildet, das zwei Arten von Öffnungen aufweist: kleinere Öffnungen, die durch relativ kleine zweite Hautelemente, beispielsweise Versteifungselemente, verschlossen werden können ("aufgelöste Knoten") und größere Öffnungen, die durch relativ große zweite Hautelemente, beispielsweise Fenster, verschlossen werden können.

Diese Art eines autonomen Stabtragwerks kann, wie oben beschrieben, beispielsweise durch polygonförmige Segmente, die jeweils mindestens drei miteinander verbundene zweite Stabelemente aufweisen und untereinander durch Verbinden ihrer Ecken oder durch Verbinden ihrer Seiten verbunden sind, oder durch durchgehende zweite Stabelemente, die sich jeweils unterbrechungsfrei zwischen zwei Rändern der Öffnung erstrecken und an Kreuzungspunkten miteinander verbunden sind, gebildet sein.

Die Öffnungen des autonomen Stabtragwerks oder/und die darin angebrachten zweiten Hautelemente oder/und Versteifungselemente können weiterhin abgerundete Ecken aufweisen oder/und oval, beispielsweise ellipsenförmig, oder/und kreisförmig sein.

Weiterhin kann vorgesehen sein, dass die ersten Stabelemente der Verbundschale ein Orthogrid oder ein Isogrid bilden. In gleicher Weise können die zweiten Stabelemente des Stabtragwerks so zueinander angeordnet sein, dass sie ein Orthogrid oder ein Isogrid bilden.

Besondere Vorteile hinsichtlich der gestalterischen Möglichkeiten für Fenster- oder Türausschnitte ergeben sich, wenn die Öffnung der Verbundschale und das darin angeordnete Stabtragwerk eine nicht rechteckige polygonförmige Außenkontur aufweisen.

Nachfolgend wird die Erfindung anhand von Ausführungsbeispielen und zugehörigen Zeichnungen näher erläutert. Dabei zeigen
Fig. 1 ein erstes Ausführungsbeispiel,
Fig. 2 ein zweites Ausführungsbeispiel und
Fig. 3 ein drittes Ausführungsbeispiel der erfindungsgemäßen Luft- oder Raumfahrzeughülle.

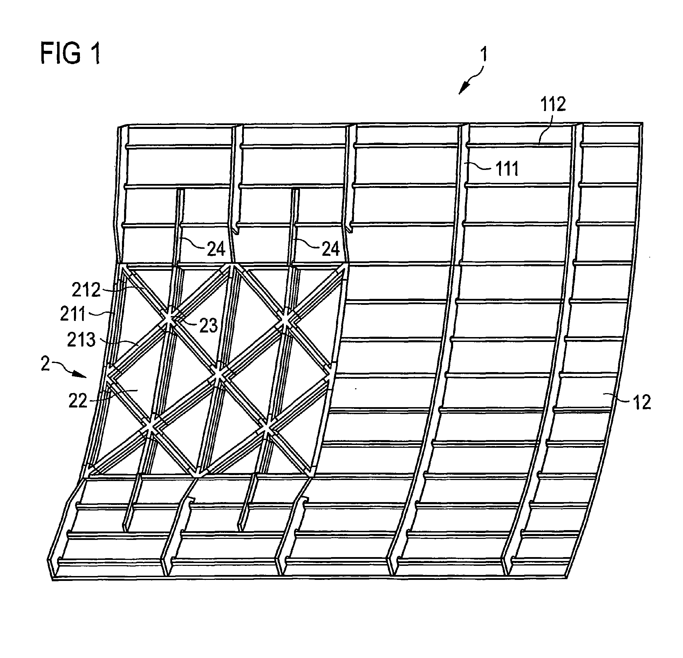

In Fig. 1 ist ein Ausschnitt aus einer Verbundschale 1 perspektivisch dargestellt. Die Verbundschale 1 besteht aus zwei Gruppen von ersten Stabelementen 111, 112 und mit diesen ersten Stabelementen 111, 112 verbundenen ersten Hautelementen 12. Die in der Längsrichtung des späteren Flugzeugrumpfes verlaufenden ersten Stabelemente 112 werden auch als Stringer bezeichnet; die quer dazu und peripher verlaufenden ersten Stabelemente 111 werden auch als Spanten bezeichnet.

In einer rechteckigen Öffnung der Verbundschale 1 ist ein Stabtragwerk 2 angeordnet, das aus drei Gruppen von zweiten Stabelementen 211, 212, 213 besteht. Die zweiten Stabelemente 211 einer ersten Gruppe verlaufen wie die Spanten 111 der Verbundschale quer zur Längsrichtung des späteren Flugzeugrumpfes. Sie weisen jedoch nur einen halb so großen Abstand zueinander auf wie die ersten Stabelemente 111.

Diejenigen zweiten Stabelemente 211 der ersten Gruppe, die am Rand des Stabtragwerks 2 auf ein erstes Stabelement 111 (Spant) der Verbundschale 1 treffen, sind mit diesen durch Anpassungselemente 24 fest verbunden. Die dazwischen angeordneten zweiten Stabelemente 211 der ersten Gruppe treffen am Rand des Stabtragwerks 2 auf erste Hautelemente 12 der Verbundschale 1 und sind mit diesen durch Anpassungselemente 24 verbunden. Die Anpassungselemente 24 können demgemäß unterschiedlich gestaltet sein, je nachdem ob sie den Übergang von einem Stabelement des Stabtragwerks 2 zu einem Stabelement oder einem Hautelement oder einem anderen Strukturelement der Verbundschale 1 herstellen.

Die zweiten Stabelemente 212 einer zweiten Gruppe und die zweiten Stabelemente 213 einer dritten Gruppe verlaufen hingegen diagonal, d.h. sie folgen einer Schraubenlinie um den späteren Flugzeugrumpf. Dabei verlaufen die zweiten Stabelemente 212 der zweiten Gruppe und die zweiten Stabelemente 213 der dritten Gruppe jedoch senkrecht zueinander, so dass sie sich schneiden, und zwar genau auf den zweiten Stabelementen 211 der ersten Gruppe.

Auf diese Weise sind an jeder Kreuzungsstelle innerhalb der Stabtragwerks 2 zweite Stabelemente 211, 212, 213 jeder der drei Gruppen beteiligt. In diesen Kreuzungspunkten sind die zweiten Stabelemente 211, 212, 213 durch Knotenelemente 23 miteinander verbunden.

Die zweiten Stabelemente 212, 213 der zweiten und dritten Gruppe sind mit einem solchen Abstand zueinander angeordnet, dass sie am seitlichen Rand des Stabtragwerks 2 mit jedem dritten der in Längsrichtung verlaufenden ersten Stabelemente 112 (Stringer) der Verbundschale 1 zusammentreffen und mit diesen verbunden sind.

Durch die Anordnung der drei Gruppen von zweiten Stabelementen 211, 212, 213 zueinander ist das Stabtragwerk 2 in dreieckige Felder unterteilt, die durch zweite Hautelemente 22 verschlossen sind. Im Ausführungsbeispiel sind die zweiten Hautelemente 22 an der Innenseite des Stabtragwerks 2 angebracht, während die ersten Hautelemente 12 der Verbundschale 1 an der Außenseite der Verbundschale 1 angebracht sind. Dabei sind die zweiten Hautelemente 22 so gelagert, dass sie an ihren Rändern frei von Biegemomenten und Tangentialkräften sind.

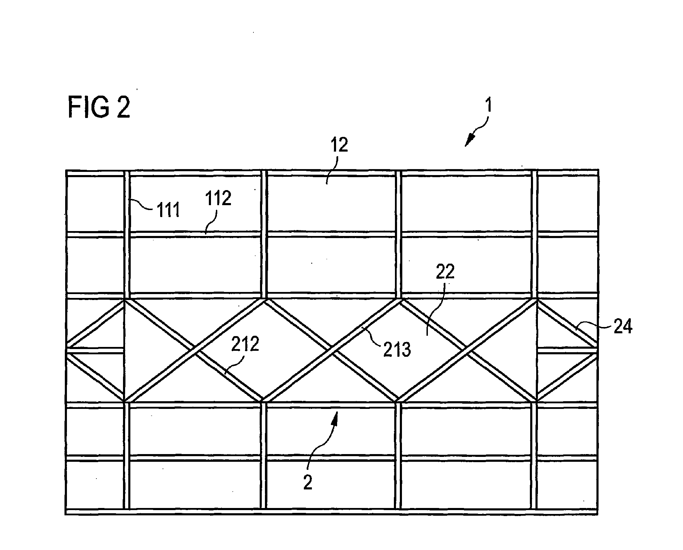

In Fig. 2 ist ein Ausschnitt aus einer Verbundschale 1 in einer einfachen Draufsicht dargestellt. Die Verbundschale 1 besteht aus zwei Gruppen von ersten Stabelementen 111, 112 und mit diesen ersten Stabelementen 111, 112 verbundenen ersten Hautelementen 12.

In einer rechteckigen Öffnung der Verbundschale 1 ist ein Stabtragwerk 2 angeordnet, das aus zwei Gruppen von zweiten Stabelementen 212, 213 besteht.

Die zweiten Stabelemente 212 einer ersten Gruppe und die zweiten Stabelemente 213 einer zweiten Gruppe verlaufen diagonal, d.h. sie folgen einer Schraubenlinie um den späteren Flugzeugrumpf. Dabei verlaufen die zweiten Stabelemente 212 der ersten Gruppe und die zweiten Stabelemente 213 der zweiten Gruppe jedoch senkrecht zueinander, so dass sie sich schneiden.

Die zweiten Stabelemente 212, 213 der ersten und zweiten Gruppe sind mit einem solchen Abstand zueinander angeordnet, dass sie am seitlichen Rand des Stabtragwerks 2 mit jedem der quer zur Längsrichtung verlaufenden Stabelemente 111 (Spant) der Verbundschale 1, aber nur mit jedem zweiten der in Längsrichtung verlaufenden ersten Stabelemente 112 (Stringer) der Verbundschale 1 zusammentreffen und mittels Anpassungselementen 24 mit diesen verbunden sind.

Durch die Anordnung der zwei Gruppen von zweiten Stabelementen 212, 213 zueinander ist das Stabtragwerk 2 in viereckige und in dreieckige Felder unterteilt, die jeweils durch zweite Hautelemente 22 verschlossen sind. Im Ausführungsbeispiel sind die zweiten Hautelemente 22 an der Innenseite des Stabtragwerks 2 angebracht, während die ersten Hautelemente 12 der Verbundschale 1 an der Außenseite der Verbundschale 1 angebracht sind. Dabei sind die zweiten Hautelemente 22 so gelagert, dass sie an ihren Rändern frei von Biegemomenten und Tangentialkräften sind.

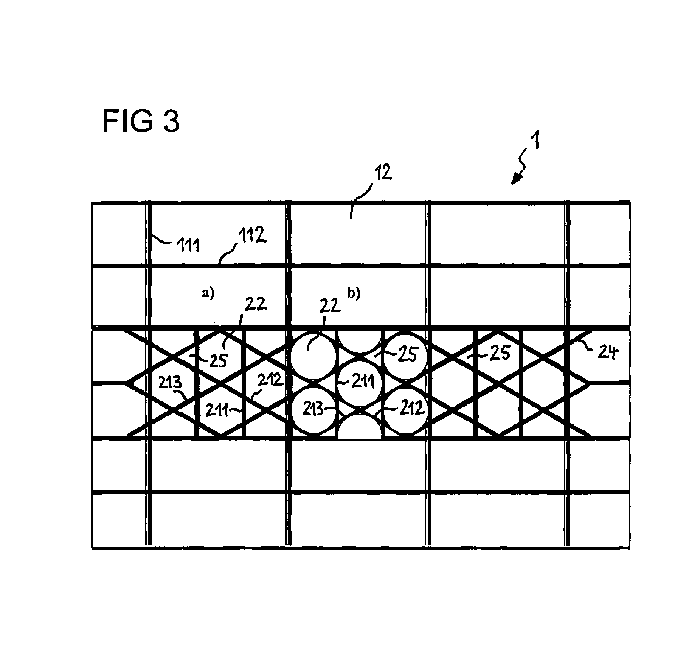

In Fig. 3 ist ein Ausschnitt aus einer Verbundschale 1 in einer einfachen Draufsicht dargestellt. Die Verbundschale 1 besteht aus zwei Gruppen von ersten Stabelementen 111, 112 und mit diesen ersten Stabelementen 111, 112 verbundenen ersten Hautelementen 12.

In einer rechteckigen Öffnung der Verbundschale 1 ist ein Stabtragwerk 2 angeordnet, das aus drei Gruppen von zweiten Stabelementen 211, 212, 213 besteht. Die zweiten Stabelemente 211 einer ersten Gruppe verlaufen wie die Spanten 111 der Verbundschale quer zur Längsrichtung des späteren Flugzeugrumpfes. Sie weisen jedoch nur einen Abstand zueinander auf, der einem Drittel des Abstands der ersten Stabelemente 111 zueinander entspricht.

Die zweiten Stabelemente 212 einer zweiten Gruppe und die zweiten Stabelemente 213 einer dritten Gruppe verlaufen hingegen diagonal, d.h. sie folgen einer Schraubenlinie um den späteren Flugzeugrumpf. Dabei verlaufen die zweiten Stabelemente 212 der zweiten Gruppe und die zweiten Stabelemente 213 der dritten Gruppe relativ zueinander und relativ zu den zweiten Stabelementen 211 der ersten Gruppe so, dass sie sich nicht in einem gemeinsamen Punkt schneiden, sondern einen aufgelösten Knoten bilden.

Die in jedem solchen aufgelösten Knoten gebildeten kleinen Öffnungen sind durch Versteifungselemente 25 verschlossen, die im Ausführungsbeispiel dreieckig gestaltet sind. Auf diese Weise sind an jedem aufgelösten Knoten innerhalb der Stabtragwerks 2 zweite Stabelemente 211, 212, 213 jeder der drei Gruppen beteiligt.

Die zwischen den aufgelösten Knoten gebildeten großen Öffnungen sind durch zweite Hautelemente 22 verschlossen, die im Ausführungsbeispiel Fenster sind und in Variante (a) sechseckig, in Variante (b) hingegen kreisförmig gestaltet sind.

Die zweiten Stabelemente 212, 213 der zweiten und dritten Gruppe sind mit einem solchen Abstand zueinander angeordnet, dass sie am seitlichen Rand des Stabtragwerks 2 mit jedem der in Längsrichtung verlaufenden ersten Stabelemente 112 (Stringer) der Verbundschale 1 zusammentreffen und mit diesen verbunden sind.

Durch die Anordnung der drei Gruppen von zweiten Stabelementen 211, 212, 213 zueinander ist das Stabtragwerk 2 in dreieckige und sechseckige bzw. kreisrunde Felder unterteilt, die durch Versteifungselemente 25 bzw. zweite Hautelemente 22 verschlossen sind. Im Ausführungsbeispiel sind die zweiten Hautelemente 22 an der Innenseite des Stabtragwerks 2 angebracht, während die ersten Hautelemente 12 der Verbundschale 1 an der Außenseite der Verbundschale 1 angebracht sind. Dabei sind die zweiten Hautelemente 22 so gelagert, dass sie an ihren Rändern frei von Biegemomenten und Tangentialkräften sind.

### Bezugszeichenliste

- 1: Verbundschale
- 111: erste Stabelemente (Spanten)
- 112: erste Stabelemente (Stringer)
- 12: erste Hautelemente
- 2: Stabtragwerk
- 211: zweite Stabelemente (peripher)
- 212: zweite Stabelemente (diagonal)
- 213: zweite Stabelemente (diagonal)
- 22: zweite Hautelemente
- 23: Knotenelemente
- 24: Anpassungselemente
- 25: aufgelöster Knoten, Versteifungselement

## Patentansprüche

1. Luft- oder Raumfahrzeughülle, umfassend eine Verbundschale (1) aus ersten Stabelementen (111, 112) oder Sandwich-Kernelementen, und aus ersten Hautelementen (12), die mit den ersten Stabelementen (111, 112) bzw. Sandwich-Kernelementen derart verbunden sind, dass sämtliche äußere Lasten von den ersten Stabelementen (111, 112) bzw. Sandwich-Kernelementen und ersten Hautelementen (12) gemeinsam aufgenommen werden, wobei die Verbundschale (1) mindestens eine Öffnung für ein Fenster, eine Tür oder dergleichen aufweist, wobei
in der Öffnung der Verbundschale (1) ein Stabtragwerk (2) aus mindestens zwei Gruppen von zweiten Stabelementen (211, 212, 213) angeordnet ist, wobei zweite Stabelemente (211, 212, 213), die derselben Gruppe angehören, parallel zueinander angeordnet sind und zweite Stabelemente (211, 212, 213), die unterschiedlichen Gruppen angehören, nichtparallel zueinander angeordnet sind und die zweiten Stabelemente (211, 212, 213) am Rand der Öffnung mit der Verbundschale (1) verbunden sind, **dadurch gekennzeichnet, dass** in jeder von zweiten Stabelementen (211, 212, 213) begrenzten Teilöffnung ein zweites Hautelement (22) so angeordnet ist, dass seine Ränder frei von Biegemomenten und Tangentialkräften sind, so dass sämtliche äußere Lasten allein von den zweiten Stabelementen (211, 212, 213) in die Verbundschale abgeleitet werden.

2. Luft- oder Raumfahrzeughülle nach Anspruch 1, **dadurch gekennzeichnet, dass** das Stabtragwerk (2) ein autonomes Stabtragwerk (2) ist, das durch Verbinden der zweiten Stabelemente (211, 212, 213) des Stabtragwerks (2) mit der Verbundschale (1), insbesondere den ersten Stabelementen (111, 112) oder/und den ersten Hautelementen (12) in die Öffnung der Verbundschale (1) eingesetzt ist.

3. Luft- oder Raumfahrzeughülle nach Anspruch 1 oder 2, **dadurch gekennzeichnet, dass** mindestens zwei zweite Stabelemente (211, 212, 213) des Stabtragwerks (2) durch Knotenelemente (23) miteinander verbunden sind.

4. Luft- oder Raumfahrzeughülle nach einem der Ansprüche 1 bis 3, **dadurch gekennzeichnet, dass** das Stabtragwerk (2) sternförmige Segmente umfasst, die jeweils mindestens drei einseitig miteinander verbundene zweite Stabelemente (211, 212, 213) aufweisen und untereinander durch Verbinden freier Enden der zweiten Stabelemente (211, 212, 213) verbunden sind.

5. Luft- oder Raumfahrzeughülle nach einem der Ansprüche 1 bis 4, **dadurch gekennzeichnet, dass** das Stabtragwerk (2) polygonförmige Segmente umfasst, die jeweils mindestens drei miteinander verbundene zweite Stabelemente (211, 212, 213) aufweisen und untereinander durch Verbinden ihrer Ecken verbunden sind.

6. Luft- oder Raumfahrzeughülle nach einem der Ansprüche 1 bis 5, **dadurch gekennzeichnet, dass** das Stabtragwerk (2) polygonförmige Segmente umfasst, die jeweils mindestens drei miteinander verbundene zweite Stabelemente (211, 212, 213) aufweisen und untereinander durch Verbinden ihrer Seiten verbunden sind.

7. Luft- oder Raumfahrzeughülle nach Anspruch 1 oder 2, **dadurch gekennzeichnet, dass** das Stabtragwerk (2) aus durchgehenden zweiten Stabelementen (211, 212, 213) zusammengesetzt ist, die sich jeweils unterbrechungsfrei zwischen zwei Rändern der Öffnung der Verbundschale (1) erstrecken und an Kreuzungspunkten miteinander verbunden sind.

8. Luft- oder Raumfahrzeughülle nach einem der Ansprüche 1 bis 7, **dadurch gekennzeichnet, dass** mindestens ein Kreuzungspunkt als aufgelöster Knoten ausgeführt ist, bei dem mindestens drei zweite Stabelemente (211, 212, 213) relativ zueinander so angeordnet sind, dass ein von den zweiten Stabelementen (211, 212, 213) begrenzter, polygonförmiger Knoten entsteht.

9. Luft- oder Raumfahrzeughülle nach einem der Ansprüche 1 bis 8, **dadurch gekennzeichnet, dass** mindestens ein zweites Hautelement (22) abgerundete Ecken aufweist oder oval oder kreisförmig ist.

10. Luft- oder Raumfahrzeughülle nach einem der Ansprüche 1 bis 9, **dadurch gekennzeichnet, dass** die ersten Stabelemente (111, 112) ein Orthogrid bilden.

11. Luft- oder Raumfahrzeughülle nach einem der Ansprüche 1 bis 9, **dadurch gekennzeichnet, dass** die ersten Stabelemente (111, 112) ein Isogrid bilden.

12. Luft- oder Raumfahrzeughülle nach einem der Ansprüche 1 bis 11, **dadurch gekennzeichnet, dass** die zweiten Stabelemente (211, 212, 213) ein Orthogrid bilden.

13. Luft- oder Raumfahrzeughülle nach einem der Ansprüche 1 bis 11, **dadurch gekennzeichnet, dass** die zweiten Stabelemente (211, 212, 213) ein Isogrid bilden.

14. Luft- oder Raumfahrzeughülle nach einem der Ansprüche 1 bis 13, **dadurch gekennzeichnet, dass** die Öffnung der Verbundschale (1) und das darin angeordnete Stabtragwerk (2) eine nicht rechteckige polygonförmige Außenkontur aufweisen.

## Claims

1. Aircraft or spacecraft casing comprising a composite shell (1) formed of first rod elements (111, 112) or sandwich core elements and first skin elements (12), which are connected to the first rod elements (111, 112) or sandwich core elements such that all exterior loads are received jointly by the first rod elements (111, 112) or sandwich core elements and the first skin elements (12), wherein the composite shell (1) has at least one opening for a window, a door or the like, wherein a rod supporting structure (2) made of at least two groups of second rod elements (211, 212, 213) is arranged in the opening in the composite shell (1), wherein second rod elements (211, 212, 213) belonging to the same group are arranged parallel to each other, and second rod elements (211, 212, 213) belonging to different groups are arranged non-parallel to each other and the second rod elements (211, 212, 213) are connected to the composite shell (1) at the edge of the opening **characterized in that** a second skin element (22) is arranged in each partial opening delimited by second rod elements (211, 212, 213) such that the free edges of the second skin element are free of bending moments and tangential forces, so that all exterior loads are redirected solely from the second rod elements (211, 212, 213) into the composite shell.

2. Aircraft or spacecraft casing according to Claim 1, **characterized in that** the rod supporting structure (2) is an autonomous rod supporting structure (2) which is inserted into the opening in the composite shell (1) by connecting the second rod elements (211, 212, 213) of the rod supporting structure (2) to the composite shell (1), in particular the first rod elements (111, 112) and/or skin elements (12).

3. Aircraft or spacecraft casing according to Claim 1 or claim 2, **characterized in that** at least two second rod elements (211, 212, 213) of the rod supporting structure (2) are interconnected by node elements (23).

4. Aircraft or spacecraft casing according to one of Claims 1 to 3, **characterized in that** the rod supporting structure (2) comprises star-shaped segments which each comprise at least three second rod elements (211, 212, 213), interconnected on one side, and are interconnected by connection of free ends of the second rod elements (211, 212, 213).

5. Aircraft or spacecraft casing according to one of Claims 1 to 4, **characterized in that** the rod supporting structure (2) comprises polygonal segments which each comprise at least three interconnected second rod elements (211, 212, 213) and are interconnected by connection of their corners.

6. Aircraft or spacecraft casing according to one of Claims 1 to 5, **characterized in that** the rod supporting structure (2) comprises polygonal segments which each comprise at least three interconnected second rod elements (211, 212, 213) and are interconnected by connection of their sides.

7. Aircraft or spacecraft casing according to Claim 1 or Claim 2, **characterized in that** the rod supporting structure (2) is composed of continuous second rod elements (211, 212, 213) which each extend, uninterrupted, between two edges of the opening in the composite shell (1) and are interconnected at intersecting points.

8. Aircraft or spacecraft casing according to one of Claims 1 to 7, **characterized in that** at least one intersecting point is designed as an open node in which at least three second rod elements (211, 212, 213) are arranged relative to one another in such a way that a polygonal node defined by the second rod elements (211, 212, 213) is formed.

9. Aircraft or spacecraft casing according to one of Claims 1 to 8, **characterized in that** at least one second skin element (22) has rounded corners or is oval or circular.

10. Aircraft or spacecraft casing according to one of Claims 1 to 9, **characterized in that** the first rod elements (111, 112) form an orthogrid.

11. Aircraft or spacecraft casing according to one of Claims 1 to 9, **characterized in that** the first rod elements (111, 112) form an isogrid.

12. Aircraft or spacecraft casing according to one of Claims 1 to 11, **characterized in that** the second rod elements (211, 212, 213) form an orthogrid.

13. Aircraft or spacecraft casing according to one of Claims 1 to 11, **characterized in that** the second rod elements (211, 212, 213) form an isogrid.

14. Aircraft or spacecraft casing according to one of Claims 1 to 13, **characterized in that** the opening in the composite shell (1) and the rod supporting structure (2) arranged therein have an outer contour which is not rectangular, but polygonal.

## Revendications

1. Enveloppe d'avion ou d'engin spatial, comprenant une coque composite (1) en premiers éléments de barres (111, 112) ou éléments de noyau de sandwich, et en premiers éléments de peau (12), qui sont assemblés aux premiers éléments de barres (111, 112) ou éléments de noyau de sandwich de telle manière que l'ensemble des charges extérieures soient reprises en commun par les premiers éléments de barres (111, 112) ou éléments de noyau de sandwich et les premiers éléments de peau (12), dans laquelle la coque composite (1) présente au moins une ouverture pour une fenêtre, une porte ou analogue, dans laquelle une structure de barres (2) composée d'au moins deux groupes de deuxièmes éléments de barres (211, 212, 213) est disposé dans l'ouverture de la coque composite (1), dans laquelle des deuxièmes éléments de barres (211, 212, 213), qui appartiennent au même groupe, sont disposés parallèlement l'un à l'autre, et des deuxièmes éléments de barres (211, 212, 213), qui appartiennent à des groupes différents, ne sont pas disposés parallèlement l'un à l'autre, et les deuxièmes éléments de barres (211, 212, 213) sont reliés à la coque composite (1) sur le bord de l'ouverture, **caractérisée en ce que**, dans chaque ouverture partielle limitée par des deuxièmes éléments de barres (211, 212, 213), un deuxième élément de peau (22) est disposé de telle manière que ses bords soient libres de moments de flexion et de forces tangentielles, de telle manière que l'ensemble des charges extérieures soient évacuées dans la coque composite uniquement par les deuxièmes éléments de barres (211, 212, 213).

2. Enveloppe d'avion ou d'engin spatial selon la revendication 1, **caractérisée en ce que** la structure de barres (2) est une structure de barres autonome (2), qui est introduite dans l'ouverture de la coque composite (1) par l'assemblage des deuxièmes éléments de barres (211, 212, 213) de la structure de barres (2) avec la coque composite (1), en particulier les premiers éléments de barres (111, 112) et/ou les premiers éléments de peau (12).

3. Enveloppe d'avion ou d'engin spatial selon la revendication 1 ou 2, **caractérisée en ce qu'**au moins deux deuxièmes éléments de barres (211, 212, 213) de la structure de barres (2) sont reliés les uns aux autres par des éléments de noeuds (23).

4. Enveloppe d'avion ou d'engin spatial selon l'une quelconque des revendications 1 à 3, **caractérisée en ce que** la structure de barres (2) comprend des segments en forme d'étoiles, qui présentent respectivement au moins trois deuxièmes éléments de barres (211, 212, 213) reliés l'un à l'autre sur un côté et qui sont reliés entre eux par assemblage des extrémités libres des deuxièmes éléments de barres (211, 212, 213).

5. Enveloppe d'avion ou d'engin spatial selon l'une quelconque des revendications 1 à 4, **caractérisée en ce que** la structure de barres (2) comprend des segments polygonaux, qui présentent respectivement au moins trois deuxièmes éléments de barres (211, 212, 213) reliés l'un à l'autre et qui sont reliés entre eux par assemblage de leurs angles.

6. Enveloppe d'avion ou d'engin spatial selon l'une quelconque des revendications 1 à 5, **caractérisée en ce que** la structure de barres (2) comprend des segments polygonaux, qui présentent respectivement au moins trois deuxièmes éléments de barres (211, 212, 213) reliés l'un à l'autre et qui sont reliés entre eux par assemblage de leurs côtés.

7. Enveloppe d'avion ou d'engin spatial selon la revendication 1 ou 2, **caractérisée en ce que** la structure de barres (2) est composée de deuxièmes éléments de barres continus (211, 212, 213), qui s'étendent respectivement sans interruption entre deux bords de l'ouverture de la coque composite (1) et qui sont reliés l'un à l'autre à des points de croisement.

8. Enveloppe d'avion ou d'engin spatial selon l'une quelconque des revendications 1 à 7, **caractérisée en ce qu'**au moins un point de croisement est réalisé sous la forme d'un noeud détaché, dans lequel au moins trois deuxièmes éléments de barres (211, 212, 213) sont disposés l'un par rapport à l'autre, de telle manière qu'il apparaisse un noeud polygonal, limité par les deuxièmes éléments de barres (211, 212, 213).

9. Enveloppe d'avion ou d'engin spatial selon l'une quelconque des revendications 1 à 8, **caractérisée en ce qu'**au moins un deuxième élément de peau (22) présente des angles arrondis ou est de forme ovale ou circulaire.

10. Enveloppe d'avion ou d'engin spatial selon l'une quelconque des revendications 1 à 9, **caractérisée en ce que** les premiers éléments de barres (111, 112) forment une orthogrille.

11. Enveloppe d'avion ou d'engin spatial selon l'une quelconque des revendications 1 à 9, **caractérisée en ce que** les premiers éléments de barres (111, 112) forment une isogrille.

12. Enveloppe d'avion ou d'engin spatial selon l'une quelconque des revendications 1 à 11, **caractérisée en ce que** les deuxièmes éléments de barres (211, 212, 213) forment une orthogrille.

13. Enveloppe d'avion ou d'engin spatial selon l'une quelconque des revendications 1 à 11, **caractérisée en ce que** les deuxièmes éléments de barres (211, 212, 213) forment une isogrille.

14. Enveloppe d'avion ou d'engin spatial selon l'une quelconque des revendications 1 à 13, **caractérisée en ce que** l'ouverture de la coque composite (1) et la structure de barres (2) disposée dans celle-ci présentent un contour extérieur polygonal non rectangulaire.
